# EUROPÄISCHE PATENTANMELDUNG

(11) **EP 1 553 504 A1**
(43) Veröffentlichungstag der Anmeldung: **13.07.2005**
(21) Anmeldenummer: 04030801.7
(22) Anmeldetag: 27.12.2004
(51) Int. Cl.: G06F 17/22

(54) **Verfahren zur elektronisch gesteuerten Verwaltung von grafisch darstellbaren Dokumentinhalten**

(30) Priorität: 30.12.2003 AT 9422003 U
(71) Anmelder: Schmid, Gerhard, 4950 Altheim (AT)
(72) Erfinder: Schmid, Gerhard, 4950 Altheim (AT)

(57) **Zusammenfassung**

Die Erfindung bezieht sich auf ein Verfahren zur elektronisch gesteuerten Verwaltung von grafisch darstellbaren Inhalten, insbesondere ein oder mehreren Zeichen, Grafiken, Tabellen, oder dergleichen, eines Dokuments in einem elektronischen Datenverarbeitungssystem, das zumindest aus einem Prozessor, einen Zwischenspeicher, eine insbesondere im Zwischenspeicher als Software hinterlegte Steuerlogik und einen Datenbus besteht. Durch die Definition eines Start- bzw. Endzeigers des im Zwischenspeicher gelagerten Dokuments wird zumindest ein Teil eines Dokumentinhalts ausgewählt, wobei mittels der Steuerlogik zumindest ein Objektblock durch Verknüpfen der ausgewählten Dokumentinhalte mit zumindest einer eindeutigen Objektkennung, insbesondere einem Kennungs- bzw. Referenz-Wert, bestimmt wird und mittels einer bei Bedarf ausführbaren Filterroutine der Steuerlogik in Abhängigkeit der durch diese als relevant ermittelten Objektkennungen der Dokumentinhalt gegebenenfalls verändert wird.

## Beschreibung

Die Erfindung betrifft ein Verfahren zur elektronisch gesteuerten Verwaltung von grafisch darstellbaren Inhalten, insbesondere ein oder mehreren Zeichen, Grafiken, Tabellen oder dgl., eines Dokuments in einem elektronischen Datenverarbeitungssystem, bestehend zumindest aus einem Prozessor, einem Zwischenspeicher, einer insbesondere am Zwischenspeicher als Software hinterlegten Steuerlogik sowie einem Datenbus und einem Darstellungsmittel, wie dies im Oberbegriff des Anspruchs 1 beschrieben ist, sowie ein Datenverarbeitungssystem, zumindest umfassend einen Prozessor, einen Zwischenspeicher, eine insbesondere im Zwischenspeicher als Software hinterlegte Steuerlogik und einen Datenbus, wie dies im Oberbegriff des Anspruchs 22 beschrieben ist.

Es sind im Stand der Technik bereits unterschiedliche Systeme zur Verwaltung von Inhalts- Bausteinen, beispielsweise Text- oder Grafikelemente eines Dokuments, auf der Basis von elektronischen Datenverarbeitungssystemen bekannt, die zur Erstellung von in dividualisierten Dokumenten dienen und mit denen unterschiedliche, in Art von Einzelbausteinen vorgesehene Dokumentinhalte zu einem einzelnen Dokument verknüpfbar sind. Hierzu werden die unterschiedlichen Bausteine eines möglichen Dokuments, die Texte, Grafiken, Tabellen usw., enthalten können, in einer Datenbank insbesondere als Einzeldateien oder Dateicluster hinterlegt und es sind diese über spezielle Funktions- bzw. Programmiersprachen in entsprechenden Datenbanken mittels Programmlogiken referenzierbar und zu einem Dokument verknüpfbar.

Eine derartige Verwaltung bzw. ein Management von Einzelbausteinen eines Dokuments ist gefordert, da für unterschiedlichste Anwendungen, beispielsweise technische Anlagen, wie Maschinen, Fahrzeuge usw., technische Dokumentationen in schriftlicher Form benötigt werden, wobei ein hohes Maß an Flexibilität und einfacher Wartung der Dokumentation erforderlich ist. um in kurzer Zeit und ohne großen personellen Aufwand die Dokumentation auf Veränderungen im dokumentierten Gegenstand anzupassen. Insbesondere technische Anlagen unterliegen häufig konstruktiven Änderungen und es werden diese oftmals nicht nur in einem Gesamtpaket, sondern nur mit jenen Funktionsmodulen bzw. Baueinheiten ausgeliefert, die von einem Abnehmer gefordert sind, sodass unterschiedliche Versionen eines Dokuments einfach und rasch herstellbar sein müssen. Eine weitere Anforderung an die Flexibilität einer Bausteinverwaltung für Dokumentinhalte liegt in der Bereitstellung unterschiedlicher Sprachvarianten, sodass das Dokument in einfacher Weise nur in der geforderten Sprachfassung abfassbar ist und keine mehrsprachigen Dokumente benötigt werden, was sich beispielsweise bei Betriebsanleitungen oder Produktbeschreibungen multinational vertriebener Produkte als kompakter und kostengünstiger erweist.

Nachteilig ist bei dem Stand der Technik bekannten Methoden zur Verwaltung von Dokumentinhalten, dass diese mittels eigener, für diesen Zweck programmierter Programmroutinen realisiert sind und die erforderlichen Datenbanken hohe Anforderungen an die Hardwareressourcen stellen, da eine Vielzahl von einzelnen, von einander unabhängigen Dokumentinhalten in Einzeldateien verwaltet werden müssen. Die Komplexität der notwendigen Software zur Verwaltung von Einzelbausteinen erfordert einen hohen Entwicklungsaufwand, wodurch die Anschaffungskosten eines derartigen Systems sehr hoch sind, und zur Bedienung derartiger Systeme ist ein erhebliches Vorwissen in der elektronischen Datenverarbeitung bzw. eine lange Einarbeitungszeit erforderlich. Durch eine derartige, dezentralisierte Verwaltung von Inhaltsbausteinen eines Dokuments entsteht weiters der Nachteil einer aufwendigen und fortlaufenden Wartung einer Vielzahl von einzelnen Bausteinen, beispielsweise der unterschiedlichen Einzeldateien für unterschiedliche Sprachfassungen, wodurch ein hoher Kosten- und Personalaufwand bzw. komplexe Strukturen der Verwaltungssoftware erforderlich sind.

Aufgabe der Erfindung ist es ein.Verfahren zur Verwaltung von Inhalten eines Dokuments mittels einem Datenverarbeitungssystem zu schaffen, dass eine kostengünstigere und einfachere Wartung bzw. Modifizierung von Dokumentinhalten ermöglicht.

Die Aufgabe der Erfindung wird unabhängig durch die Merkmale im Kennzeichenteil des Anspruches 1 gelöst. Von Vorteil ist dabei, dass durch die Vergabe von Objektkennungen an definierte Dokumentinhalte Objektblöcke gebildet werden, die in Art eines Bausteins des Gesamtinhalts im Dokument eingebettet sind, wobei mehrere oder sämtliche Objektblöcke in nur einem Einzeldokument integriert sind und diese für sich eigenständig innerhalb des Dokuments referenzierbar sind. Somit besteht die Möglichkeit, unterschiedliche Inhalte, die sinngemäß einander nicht zugehörig sind, in nur einem Dokument anzugeben, wobei die unterschiedlichen Inhalte in voneinander unabhängige Objektblöcke mit unterschiedlichen Objektkennungen, insbesondere über eine Gliederungsroutine der Steuerlogik, gegliedert werden. Mittels der Filterroutine der Steuerlogik ist es nunmehr in vorteilharter Weise möglich, in Abhängigkeit der als relevant festgestellten Objektkennungen den Dokumentinhalt nach aktuellen Anforderungen zu verändern. Mittels einer derartigen Struktur in einem Dokument ist in vorteilhafter Weise die Möglichkeit gegeben, in nur einer Datei, insbesondere einer Masterdatei, unterschiedliche Sprachversionen, Leistungsdaten, Bauteilgruppen von Anlagen oder dgl., aufzunehmen und in Abhängigkeit der relevanten Objektblöcke mittels der Filterroutine den Dokumentinhalt automatisiert und rechnergestützt zu adaptieren bzw. individualisieren. Aufgrund der nur einen, benötigten Masterdatei, in der sämtliche Dokumentinhalte hinterlegt sind, kann der Wartungsaufwand gegenüber einer Datenbanklösung mit Einzeldateien stark reduziert werden und Änderungen schnellerer und sicherer erfolgen, wodurch eine Kostenreduktion des Modifizierungs- und Wartungsvorganges erreicht wird. Weiters müssen typenunabhängige Veränderungen, beispielsweise der Austausch einer global gültigen Grafik, nur einmal durchgeführt werden und es kann sehr schnell auf Änderungen an einer Anlage bzw. den zu dokumentierenden Gegenstand reagiert werden.

In den Ansprüchen 2 bis 6 sind vorteilhafte Maßnahmen zur individuellen Veränderung des Dokumentinhalts beschrieben. Durch Ein- bzw. Ausblenden von relevanten Objektblöcken im Dokument gemäß Anspruch 2 ist die Möglichkeit der einfachen Erstellung anwendungsspezifischer bzw. benutzerspezifischer Dokumentationen möglich, wobei ausgeblendete Inhalte grafisch nicht im Dokument dargestellt sind, jedoch im Zwischenspeicher bzw. einem Festspeicher hinterlegt bleiben und somit bei Bedarf wieder darstellbar sind.

Die in Anspruch 3 beschriebene Vorgehensweise ist vorteilhaft, da durch Extrahieren von relevanten Dokumentinhalten in ein vom Quelldokument separates Zieldokument, die durch unterschiedliche Datensätze gebildet sind, nur die gewünschten Dokumentinhalte in einer kompakten Datei zusammengefasst werden können. Dateiinhalte können somit auf Benutzergruppen abgestimmt werden, beispielsweise durch Ausfiltern von nicht relevanten oder vertraulichen Informationen aus der Quelldatei.

Die vorteilhafte Vorgehensweise gemäß Anspruch 4 ermöglicht die dauerhafte Anpassung des Dokumentinhalts durch Ergänzen bzw. Löschen von Objektblöcken.

In Anspruch 5 und 6 sind weitere vorteilhafte Maßnahmen zur Kenntlichmachung von relevanten Objektblöcken beschrieben, um eine möglichst flexible Adaptierung des Dokumentinhalts zu ermöglichen.

Mittels der in Anspruch 7 beschriebenen Maßnahmen kann eine vorteilhafte Struktur in einem Dokument geschaffen werden, die eine einfache und kostengünstige Individualisierung bzw. Adaptierung von Dokumentinhalten in Art eines Bausteinprinzipes innerhalb nur einer einzigen Datei ermöglicht.

Eine weitere vorteilhafte Maßnahme ist in Anspruch 8 beschrieben, wobei über die Gliederungsroutine eine automatisierte und definierbare Verknüpfung bzw. Zuweisung von Objektkennungen zur Bildung von Objektblöcken erfolgen kann.

In den Ansprüchen 9 und 10 sind vorteilhafte Vorgehensweisen zur Vergabe von Objektkennungen beschrieben. Kategorien für eine "Sprachzuordnung" sind hierbei von Vorteil, da unterschiedliche Sprachversionen des selben Inhaltes in einem Dokument beinhaltet sein können, jedoch die unterschiedlichen Sprachfassungen des Textes mit unterschiedlichen Objektkennungen für die jeweilige Sprache verknüpfbar sind, wodurch eine Filterung bzw. Einschränkung des Dokumentinhalts auf ein oder mehrere gewünschte Sprachen erfolgen kann. Nach einmaliger Texteingabe aller Sprachfassungen und erfolgter Gliederung in Objektblöcke ist die Herstellung unterschiedlicher Sprachversionen eines Dokuments somit mit sehr geringem Aufwand verbunden. Es ist weiters möglich, unterschiedliche Kategorien für "Typ- bzw. Modellzuordnungen" vorzusehen, wodurch der Dokumentinhalt auf unterschiedliche, sprachunabhängige Gegenstände, z.B. Aufbauten bzw. Versionen von dokumentierten Einrichtungen wie technischer Anlagen in Modulbauweise oder dgl., abgestimmt werden kann.

Die Maßnahme gemäß Anspruch 11 ist vorteilhaft, da mittels benutzerdefinierter Objektkennungen bzw. Selektions-Bedingungen eine sehr hohe Flexibilität und ein sehr breites Anwendungsspektrum bei der bausteinartigen Verwaltung von Dokumentinhalten ermöglicht wird.

Ein vorteilhafte Vorgehensweise ist in Anspruch 12 beschrieben, wobei mit den jeweils eindeutig identifizierbaren Objektkennungen durch die Referenz-Werte eine eindeutige Ausscheidung oder Zuordnung von Objektblöcken in einem Auswerteverfahren, beispielsweise einer logischen Operation wie einer Vergleichsoperation, erfolgen kann.

Von Vorteil ist auch eine Methode nach Anspruch 13, wobei mittels Zuordnung eines zusätzlichen Datensatzes zum Dokumentinhalt dieser in seinen Eigenschaften bzw. seinem Erscheinungsbild unverändert bleiben kann, jedoch eindeutig identifizierbar ist oder mittels der Veränderung einer Eigenschaft, die eindeutig der Objektkennung zugewiesen ist, kein zusätzlicher Datensatz notwendig ist und die Objektkennung aufgrund des Erscheinungsbildes bzw. den Eigenschaften des Dokumentinhalts des Objektblockes feststellbar ist.

Vorteilhafte Maßnahmen sind auch in den Ansprüchen 14 bis 16 beschrieben, wobei mittels einer Filterroutine und einer Selektions-Bedingung die relevanten Objektblöcke feststellbar sind. Hierzu wird die Selektions-Bedingung festgelegt, wobei diese den Bezugsparameter bzw. den Schlüsselwert darstellt, nach dem die Filterung erfolgen soll. Die zu verändernden Objektblöcke im Dokument können somit in einem bekannten Filter-Algorithmus festgestellt werden, worauf über Veränderung des Datensatzes des Dokuments im Zwischenspeicher der betroffene Dokumentinhalt verändert werden kann.

Die in den Ansprüchen 17 und 18 beschriebenen Methoden sind von Vorteil, da durch Benutzereingaben über aus dem Stand der Technik bekannte Eingabegeräte eine gewohnte und einfache Navigation für den Benutzer erfolgen kann und aus dem Stand der Technik bekannte Programme, wie Windows® oder Word®, die eine sehr weite Verbreitung finden, die Bedienung eines Verarbeitungssystems für einen in gewohnter Weise erfolgen kann, wodurch Einschulungszeiten bei der Verwendung des erfindungsgemäßen Datenverarbeitungssystems gering gehalten werden. Ebenso sind die in den Ansprüchen 19 bis 21 beschriebenen Maßnahmen durch die Möglichkeit der Verwendung von bekannten und etablierten Systemen zur elektronischen Datenverarbeitung von Vorteil.

Die Aufgabe der Erfindung wird weiters eigenständig durch die im Kennzeichenteil des Anspruchs 22 beschriebenen Merkmale gelöst, wobei die entsprechenden Vorteile hierzu den vorstehenden Ausführungen zu entnehmen sind.

Die Erfindung wird im nachfolgenden anhand der in den Zeichnungen schematisch dargestellten Ausführungsbeispiele näher erläutert.

Es zeigen:
- Fig. 1: ein elektronisches Datenverarbeitungssystem zur Verwaltung von grafisch darstellbaren Inhalten eines Dokuments;
- Fig. 2: eine mögliche Architektur des elektronischen Datenverarbeitungssystems nach Fig. 1;
- Fig. 3: ein Flussdiagram, umfassend die wesentlichen Verfahrensschritte zur Verwaltung von grafisch darstellbaren Inhalten eines Dokuments;
- Fig. 4: ein Flussdiagram, welches eine mögliche Aneinanderfolge von Verfahrensschritten zur Verwaltung von grafisch darstellbaren Inhalten eines Dokuments darstellt;
- Fig. 5: ein virtuelles Dokument in einer Datenverarbeitungsanlage mit einem in mehrere Objektblöcke gegliederten Dokumentinhalt;
- Fig. 6: das Dokument nach Fig. 5 nach erfolgter Veränderung des Dokumentinhalts mittels der Filterroutine der Steuerlogik.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

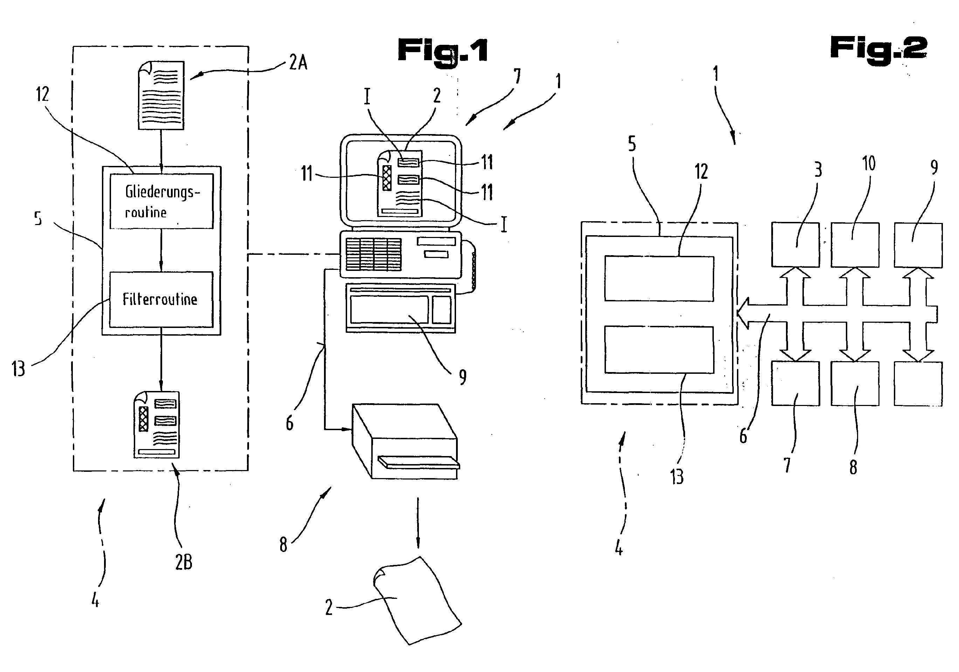

In den Fig. 1 und 2 ist ein elektronisches Datenverarbeitungssystem 1 gezeigt, mit welchem das erfindungsgemäße Verfahren zur elektronisch gesteuerten Verwaltung von grafisch darstellbaren Inhalten eines elektronischen Dokuments 2 durchführbar ist.

Grundsätzlich ist die Erfindung auf dem Gebiet der elektronischen Verarbeitung von Dokumenten 2 mittels dem Datenverarbeitungssystem 1, insbesondere einem interaktiven Textverarbeitungssystem, angesiedelt. Das Datenverarbeitungssystem 1 besteht zumindest aus einem Prozessor 3, insbesondere einem Mikroprozessor, einem Zwischenspeicher 4, insbesondere einem dynamischen Speicher, einer Steuerlogik 5, die vorzugsweise im Zwischenspeicher als Softwareprogramm hinterlegt ist, einen Daten- bzw. Systembus 6, über den die unterschiedlichen Einzelkomponenten des Datenverarbeitungssystems 1 zur Signal- und/oder Datenübertragung verbunden sind und ein Darstellungsmittel 7, insbesondere einen Bildschirm. Das Datenverarbeitungssystem 1 kann weiters eine Ausgabeeinrichtung 8, insbesondere einen Drucker oder dgl., ein Eingabegerät 9, insbesondere eine Tastatur bzw. ein Zeigegerät wie eine Maus, sowie einen Festspeicher 10, z.B. einen durch ein magnetisches Speichermedium, wie eine Floppydisk, Festplatte, Magnetband oder durch ein optisches Medium, wie z.B. ein CD-ROM bzw. DVD-ROM oder durch Lochkartensysteme oder durch elektronische Speicherchips, wie ROM, EP-ROM oder durch Halbleiterspeicher gebildeten Datenträger, im Datenverarbeitungssystem vorgesehen sein. Zum Zwischenspeicher 4 sei angemerkt, dass dieser vorzugsweise als dynamischer Speicher, z.B. Random Access Memory (RAM) oder dgl. gebildet ist. Der Prozessor 3 ist vorzugsweise als Mikroprozessor mit Befehisspeicher gebildet und es ist der Datenbus 6 vorzugsweise als üblicher Systembus, umfassend einen Adress- und Datenkanal, gebildet. Der hardwaremäßige Aufbau des Datenverarbeitungssystems 1 entspricht entsprechend der vorstehenden Ausführungen einem üblichen Computersystem, beispielsweise einem Per sonalcomputer, wie dieser im Stand der Technik bekannt ist und auf dessen nähere Funktionsweise bzw. den detaillierten Ablauf der Adressier- und Steuervorgänge durch über den Datenbus 6 übertragende Steuersignale nicht eingegangen wird, da diese Abläufe dem auf diesem Gebiet tätigen Fachmann bekannt sind.

Als Dokument 2 werden im Nachfolgenden elektronische Schriftstücke mit grafisch dargestellten Inhalten bezeichnet, wobei diese Inhalte beispielsweise ein oder mehrere Zeichen bzw. Textsymbole, Grafiken, Tabellen, Formulare, Listen, usw. darstellen. Das Dokument 2 ist dem Datenverarbeitungssystem 1 als im Zwischenspeicher 4 und/oder Restspeicher 10 hinterlegte Datei zugeordnet. Die Erfindung ist hierbei nicht auf die Verarbeitung einer speziellen Art von Dokumenten 2 bzw. Datentypen derselben beschränkt, d.h. es können sämtliche in elektronischer Form, z.B. als Text, Grafik, usw. oder Mischdokumente vorliegende Dokumente 2 verwendet werden. Es sei weiters angemerkt, dass mit dem Begriff "Dokumentinhalt" der schriftliche und/oder grafisch darstellbare Inhalt des Dokuments 2, d.h. dessen Zeichen, insbesondere ASCII- oder ANSI- Zeichen und/oder Pixel bzw. Vektordarstellungen usw., also der "bedruckte" Bereich des Dokuments 2 verstanden wird.

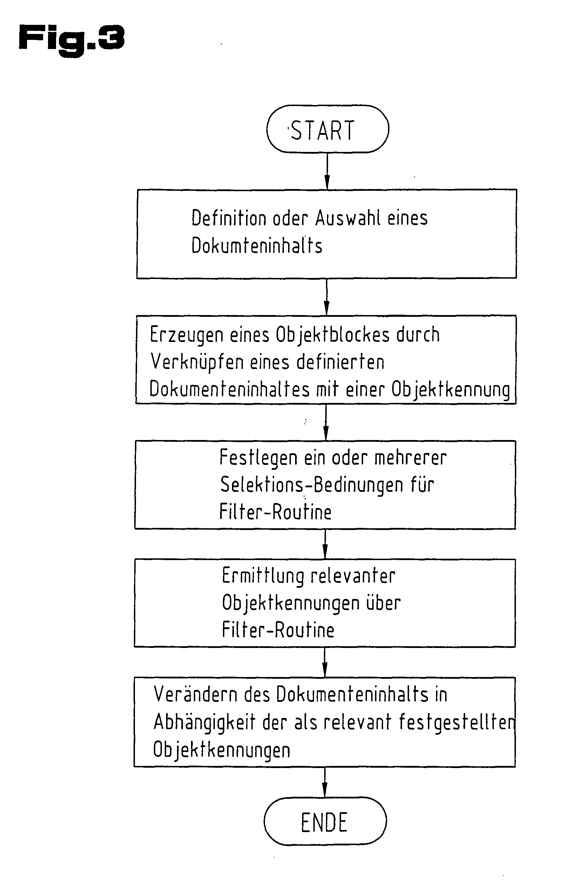

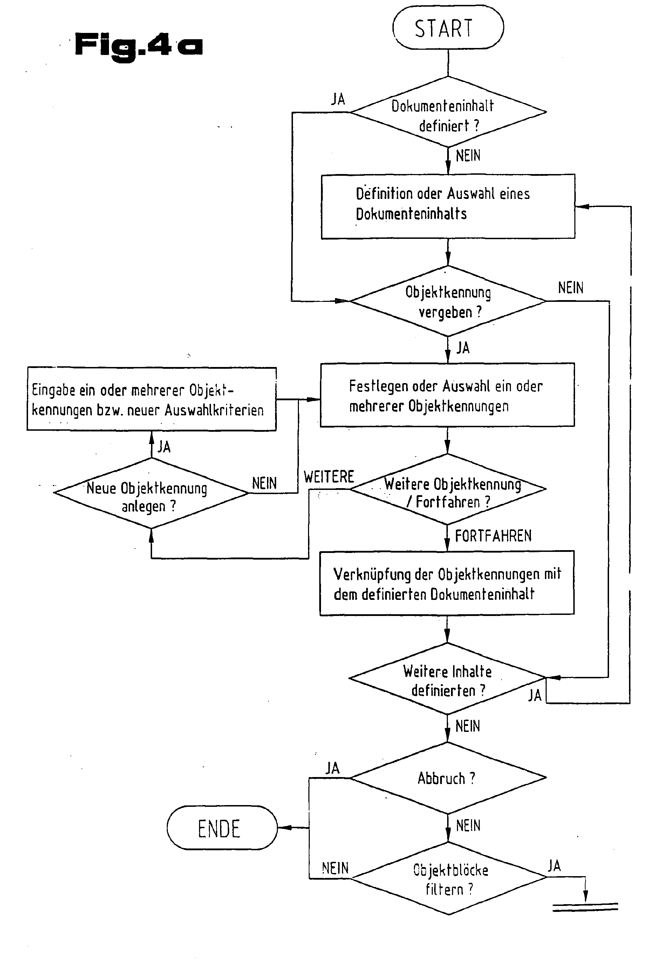

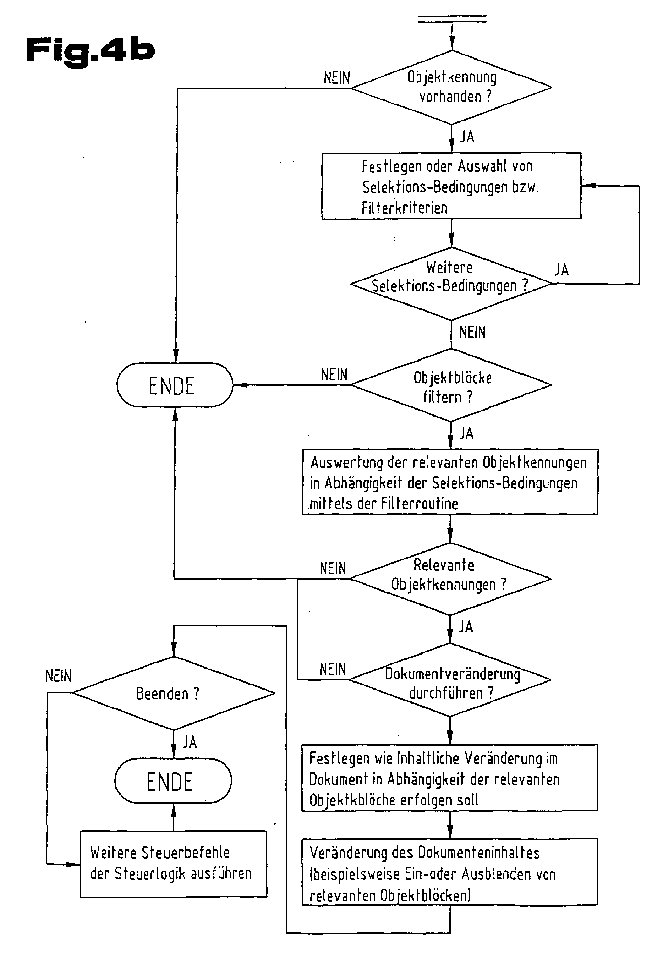

Wie nun in Fig. 1 bzw. in den Ablaufdiagrammen in den Fig. 3, 4a und 4b dargestellt, wird erfindungsgemäß ein ursprüngliches, in den Zwischenspeicher 4 geladenes Dokument 2A von der Steuerlogik 5 derart verändert, dass der grafisch darstellbare Dokumentinhalt I in ein oder mehrere Obj ektblöcke 11 gegliedert wird und das Dokument 2 mit einer bausteinartigen Struktur des gesamten Dokumentinhalts I versehen wird. Jeder Objektblock 11 besteht aus zumindest einer auswählbaren bzw. definierbaren Einheit des Dokumentinhalts I, insbesondere einem Zeichen, beispielsweise ANSI- oder ASCII-Zeichen, oder Objekt, insbesondere einer Pixel- oder Vektorgrafik, einer Tabelle bzw. einer Unterinstanz einer Tabelle. Zur Schaffung des Objektblocks 11 werden ein oder mehrere dieser Einheiten des Dokumentinhalts I definiert, insbesondere benutzerspezifisch ausgewählt, worauf der definierte Dokumentinhalt I mittels einer Gliederungsroutine 12 der Steuerlogik 5 mit einer eindeutigen Objektkennung verknüpft wird. Der mit der Objektkennung verknüpfte Dokumentinhalt I bildet den virtuellen Objektblock 11, der über die Objektkennung von der Steuerlogik 5 referenzierbar bzw. identifizierbar ist. Der virtuelle Objektblock 11 ist hierbei als Datensatz im Zwischenspeicher 4 bzw. dem Festspeicher 10 gelagert und mittels Manipulation, insbesondere mittels von der Steuerlogik 5 vorgegebener bzw. definierbarer Steuerbefehle, in dessen Datenstruktur jederzeit veränderbar. Das im Zwischenspeicher 4 befindliche, nach der Durchführung der Gliederungsroutine der Steuerlogik inhaltlich zumindest teilweise in ein oder mehrere Objektblöcke 11 gegliederte Dokument 2B ist symbolisch in Fig. 1 dargestellt.

Mittels einem derartigen Verfahrensablauf wird eine Struktur im Dokument 2 geschaffen, die aus unabhängig voneinander referenzier- bzw. ermittelbaren Objektblöcken 11 mit diesen zugeordneten Dokumentinhalten I besteht. Die einzelnen Objektblöcke 11 bilden jeweils einen in ihren Eigenschaften über die Steuerlogik 5 ansteuerbaren bzw. veränderbaren Baustein, der insbesondere in der Art der Darstellung am Darstellungsmittel 7 veränderbar ist. So ist es möglich, dass mittels einer in dem Zwischenspeicher 4 geladenen und bedarfsweise ausführbaren Filterroutine 13 der Steuerlogik 5 die in der Datei des Dokuments 2 eingebetteten Objektkennungen der Objektblöcke 11 ermittelt werden und in Ab hängigkeit der als relevant ermittelten Objektkennungen der Dokumentinhalt I gegebenenfalls verändert wird. Diese Veränderung des Dokumentinhalts I kann durch die genannte Veränderung ein oder mehrerer Eigenschaften der Objektblöcke, die mit den relevanten Objektkennungen verknüpft sind, erfolgen.

In einer bevorzugten Ausführungsvariante erfolgt der Steuervorgang mittels der Steuerlogik 5 derart, dass in der Filterroutine 13 neben den Objektkennungen, die den Objektblöcken 11 eindeutig zugeordnet sind, ein oder mehrere Selektions-Bedingungen in einem Auswerteverfahren berücksichtigt werden, wobei die Selektions-Bedingungen die Filterungs-Parameter bzw. Bezugswerte darstellen, mittels denen die relevanten Objektkennungen festgestellt werden. Die Selektions-Bedingungen stellen also jene Kriterien dar, nach denen die Filterroutine 13 die für den aktuellen Auswertevorgang relevanten Objektblöcke 11 bzw. Objektkennungen feststellt.

Hierzu sei zum besseren Verständnis ein Beispiel zum prinzipiellen Ablauf des erfindungsgemäßen Verfahrens angeführt, wobei die untenstehend genannten Objektkennungen bzw. Selektions-Bedingungen selbstverständlich beliebig abgewandelt sein können. So können ein oder mehrere beispielsweise in deutscher Sprache abgefasste Textpassagen des Dokumentinhalts I ausgewählt bzw. definiert werden und diese definierten Textpassagen zweckmäßigerweise mit einer Objektkennung "Sprache Deutsch" verknüpft werden. Auf die gebildeten, virtuellen Objektblöcke 11 der Kategorie "Sprache Deutsch" kann nun über die Filterroutine 13 bei Bedarf zugegriffen werden bzw. es sind diese referenzierbar. Erfolgt nun eine Filterung bzw. Evaluierung des Dokumentinhalts, wird zumindest eine Selektions-Bedingung festgelegt, die bevorzugt einer der im Dokument 2 eingebundenen Objektkennungen entspricht. Gemäß dem Beispiel wird als Selektions-Bedingung das Kriterium "Sprache Deutsch" festgelegt, sodass die Filterroutine eine Auswertung der relevanten Objektkennungen im Dokument 2 in Abhängigkeit des Kriteriums "Sprache Deutsch" vornehmen kann, wobei die relevanten Objektkennungen aufgrund der übereinstimmenden oder nicht übereinstimmenden Werte mit den Selektions-Bedingungen, insbesondere in einer logischen Operation wie z.B. einer Vergleichsoperation, feststellbar sind. Nun kann gegebenenfalls das Verändern der als relevant festgestellten Objektblöcke 11 erfolgen, beispielsweise indem diese durch Ein- oder Ausblenden derselben im Dokument 2 dargestellt oder nicht dargestellt werden. Beispielsgemäß kann ein Ausblenden sämtlicher Objektblöcke 11 erfolgen, die nicht mit der Objektkennung "Sprache Deutsch" verknüpft sind, sodass nur mehr jene Dokumentinhalte I dargestellt werden, denen die Objektkennung "Sprache Deutsch" zugewiesen ist, wodurch in einfacher Weise ein mehrsprachiges Dokument nur in deutscher Sprache abfassbar ist. Das im Beispiel beschriebene Verfahren ist im Funktionsprinzip selbstverständlich auf sämtliche Arten von Dokumentinhalten und auf unterschiedlichen Kategorien von Objektkennungen bzw. Selektions-Bedingungen, insbesondere unterschiedliche Sprachkategorien oder Modell- bzw. Typenkategorien, übertragbar, wobei derartige Abwandlungen im Können des Fachmanns liegen und auf diese Abwandlungen nicht näher eingegangen wird.

Der durch die Gliederungsroutine 12 bzw. Filterroutine 13 der Steuerlogik 5 vorgegebene Steuerablauf kann derart erfolgen, dass bei Zuweisung einer Objektkennung an den ausgewählten bzw. definierten Dokumentinhalt I ein für die Kategorie der Objektkennung charakteristischer Wert generiert wird und dieser im Zwischenspeicher hinterlegt wird, oder der definierte Dokumentinhalt I im Zwischenspeicher 4 manipuliert wird. Die charakteristischen Werte sind aus den entsprechenden Speicherbereichen des Zwischenspeichers 4 über die Filterroutine 13 der Steuerlogik 5 aufrufbar und können weiteren Werten, die in Abhängigkeit der ausgewählten Selektions-Bedingungen generiert und im Zwischenspeicher 5 hinterlegt sind, im Auswertevorgang gegenübergestellt werden. Bei Feststellung einer Übereinstimmung oder Nichtübereinstimmung der genannten Werte erfolgt eine Klassifizierung der Objektblöcke 11 als relevant bzw. nicht- relevant, worauf in Abhängigkeit der festgestellten Klassifizierungen das Dokument 2 durch Steuerbefehle der Steuerlogik inhaltlich verändert wird.

Wie bereits beschrieben, kann nach Feststellung der relevanten Objektkennungen der Dokumentinhalt I des Dokuments 2 nun derartig verändert werden, dass beispielsweise eine Veränderung der Sichtbarkeit der Objektblöcke 11, denen die relevanten Objektkennungen zugeordnet sind, durch Ein- oder Ausblenden derselben erfolgt und alle Dokumentinhalte I der für nicht relevant befundenen Objektblöcke 11 ausgefiltert werden und aus der Darstellung am Darstellungsmittel entfernt bzw. ausgegliedert werden.

Weiters ist es möglich, dass die Steuerlogik 5 den Dokumentinhalt I derartig verändert, dass Objektblöcke 11 aus dem Dokument 2 extrahiert werden, wobei das Dokument 2 mit den auszulesenden Dokumentinhalten I den Quelldatensatz, der im Zwischenspeicher 4 bzw. Festspeicher 10 hinterlegt ist, darstellt und die Steuerlogik 5 die zu extrahierenden Objektblöcke 11 in einem Zieldatensatz im Zwischen- oder Festspeicher mit den auszulesenden Dokumentinhalten I hinterlegt. Der Zieldatensatz kann hierbei die Definition der Objektblöcke 11 enthalten, oder es ist der extrahierte Dokumentinhalt I im Zieldatensatz ohne unstrukturiert, d.h. ohne zugewiesenen Referenzwerten, hinterlegt.

Eine weitere Möglichkeit der Veränderung des Dokumentinhalts I besteht darin, dass die Steuerlogik 5 die Objektblöcke 11 aus dem Dokument 2 dauerhaft löscht oder einfügt, wobei dies gegebenenfalls durch importieren aus einer fremden Datei erfolgen kann.

Weiters kann über die Steuerlogik 5 der Dokumentinhalt I derartig verändert werden, dass die Position der Objektblöcke 11 im Dokument 2 verändert wird und die Objektblöcke 11 im Dokument an eine Position unterhalb oder oberhalb der bisherigen Position verschoben werden. Beispielsweise werden die Objektblöcke 11 an den Beginn einer neuen Seite, Zeile, Absatz oder einer definierten Marke im Dokument 2 verschoben.

Es kann über die Steuerlogik 5 der Dokumentinhalt I auch derartig verändert werden, dass Darstellungseigenschaften des Dokumentinhalts in den Objektblöcken 11 verändert werden, wobei beispielsweise die Darstellungsfarbe, Darstellungsgröße, Schriftart, Darstellungseffekte von Zeichenblöcken, Tabellen, Grafiken oder dgl. verändert werden.

Die Auswahl jener Dokumentinhalte I, die zur Bildung eines Objektblockes 11 mit Objektkennungen verknüpft werden sollen, erfolgt durch die Definition eines Start- bzw. Endzeigers im virtuellen Dokument 2. Der Start- bzw. Endzeiger beinhaltet die Information, welche Teile des Dokumentinhaltes I hervorgehoben bzw. gekennzeichnet sind, um an diesen Teilen weitere Bearbeitungsschritte, insbesondere die Verknüpfung mit den Objektkennungen oder in einem interaktiven Textverarbeitungssystem übliche Maßnahmen wie Unterstreichen usw., durchzuführen. Beispielsweise kann das Setzen des Start- bzw. Endzeigers durch sogenanntes Markieren einer Passage des Dokumentinhalts I erfolgen, wie dies mit aus dem Stand der Technik bekannten, interaktiven Textverarbeitungssystemen, wie z.B. Word®, möglich ist. Es ist hierbei jedoch die Anwendung sämtlicher Methoden zur Auswahl von einzelnen Teilen eines gesamten Dokumentinhalts I eines Dokuments 2 möglich.

Es ist in Fig. 1 eine funktionelle Aufteilung der Steuerlogik 5 in die Module der Gliederungsroutine 12 und der Filterroutine 13 dargestellt. Wie vorstehend bereits angemerkt, erfolgt über die Gliederungsroutine 12 der Steuerlogik 5 die Verknüpfung bzw. Zuweisung der Objektkennungen an den ausgewählten Dokumentinhalt I zur Definition der Objektblöcke 11. In der Gliederungsroutine 12 sind unterschiedliche Kategorien von Objektkennungen definierbar bzw. in diesem als Voreinstellung hinterlegt und es können diese Objektkennungen entweder manuell durch eine Benutzereingabe oder automatisiert aus dem ausgewählten Dokumentinhalt I zugewiesen werden. Im Wesentlichen erfüllen die Objektkennungen den Zweck, die Art des Dokumentinhalts zu bestimmen, um eine Filterung unterschiedlichster Arten von Dokumentinhalten I im Dokument 2 zu ermöglichen. Beispielsweise können unterschiedliche Kategorien von Objektkennungen zur Definition von unterschiedlichen Sprachversionen im Dokument, wie beispielsweise "Deutsch", "Englisch", "Französisch", "Italienisch", "Spanisch" usw., vorgesehen sein, wobei eine oder mehrere dieser Objektkennungen je mit einem definierten Dokumentinhalt I verknüpfbar sind. Jede Bedingung weist hierbei einen unterschiedlichen Kennwert auf, der mit dem Dokumentinhalt I verknüpft wird.

Zu den Sprachkategorien sei der Vorteil angemerkt, dass durch diese die Möglichkeit geschaffen wird in einem Dokument mehrere Sprachfassungen, beispielsweise einer technischen Beschreibung, Gebrauchsanweisung oder dgl., hinterlegt sein können, wobei der Inhalt jeder Sprachfassungen mit der für diese vorgesehenen Objektkennung versehen ist. In weiterer Folge kann der Dokumentinhalt I somit nach Sprachen über die Filterroutine der Steuerlogik 5 gefiltert werden, wie dies anhand des obgenannten Beispiels beschrieben ist. Es sei hierbei die vorteilhafte Anwendungsmöglichkeit des erfindungsgemäßen Verfahrens zur individuellen Anpassung der Unterlagen bei Vorträgen bzw. Präsentationen angemerkt, wobei die Unterlagen rasch auf unterschiedliche Sprachverständnisse von Rezipienten abgestimmt werden können, wodurch mittels auf multilinguale Audienzen abgestimmter Unterlagen Verständigungsprobleme verhindert werden.

Zu den unterschiedlichen Sprachfassungen im Dokument 2 sei angemerkt, dass die Eingabe des Textes in das Dokument 2 mittels dem Textverarbeitungssystem durch Benutzereingaben in das Eingabegerät 9 in bekannter Weise erfolgen kann, wobei die Möglichkeit der Vergabe eines bestimmten Status eines Objektblockes bzw. Dokumentinhalts besteht, beispielsweise indem in der Objektkennung eine zusätzliche Status-Information kodiert wird bzw. gewisse Textpassagen durch ein Platzhaltersymbol, das ein oder mehrere bestimmte oder bestimmbare Zeichen umfassen kann, kenntlich gemacht werden. Somit können unterschiedliche Dokumentationsfortschritte innerhalb des Dokuments 2 nachvollzogen werden, beispielsweise können bereits überarbeitete Texte einer Sprache mit einem anderen Status versehen werden, als Texte einer anderen Sprache, die noch nicht aktualisiert wurden.

Es ist weiters möglich, neben Sprachkategorien weitere Kategorien von Objektkennungen vorzusehen, die Allgemein als Typen- bzw. Modellkategorien bezeichnet werden. Mit d Objektkennungen der Typen- bzw. Modellkategorien können gewisse Dokumentinhalte I einem spezifischen Gegenstand zugeordnet werden, beispielsweise einer Bauteil bzw. Funktionsgruppe einer technischen Anlage, oder sprachunabhängige Objektkennungen für Inhalte wie z.B. numerische Angaben, Leistungsdaten oder dgl., vergeben werden. Somit können einzelne, auf spezielle Gegenstände bzw. Komponenten bezogene Dokumentinhalte ausgefiltert werden, wenn diese in der Dokumentation nicht erforderlich sind. Dies trifft beispielsweise für Gebrauchsanweisungen oder Beschreibungen für Produkte zu, die modulbasiert aufgebaut sind und die auf individuelle Anforderungen abgestimmt sind, sodass gewisse Module einer Anlage vorhanden bzw. nicht vorhanden sein können und dementsprechend die für diese vorgesehene Inhalte bzw. die betroffenen Objektblöcke 11 im Dokument 2 vorhanden bzw. nicht vorhanden sein müssen.

Es sei zu den Objektkennungen 11 bzw. Selektions-Bedingungen angemerkt, dass diese frei definierbar sein können und über Benutzereingaben neu eingegeben und gespeichert werden können. Das erfindungsgemäße Verfahren ist somit sehr flexibel anwendbar und nicht nur für technische Dokumentation mit variablen Produktbeschreibungsteilen geeignet, sondern überall dort anwendbar, wo beispielsweise unterschiedliche Sprachfassungen eines Dokuments 2 in individuellen Dokumentenversionen übersichtlich aufbereitet sein sollen.

Über die Gliederungsroutine 12 können auch mehrere Objektkennungen an denselben Dokumentinhalt I vergeben werden, sodass einem Objektblock 11 beispielsweise die Bedingung "Sprache Deutsch" sowie "Bauteilnummer X" zugewiesen ist. Jedem Objektblock 11 kann dabei eine beliebige Anzahl von unterschiedlichen Objektkennungen zugewiesen werden, sodass eine sehr feine und flexible Gliederung des Dokumentinhalts I ermöglicht wird.

Die Objektkennungen bzw. die aus diesen generierten Werte können den Objektblöcken 11 als zusätzlicher Datensatz, insbesondere in Art einer digitalen Signatur, zugeordnet sein, oder es sind diese im entsprechenden Dokumentinhalt I kodiert bzw. eingebettet, wobei dies durch die Vergabe von unterschiedlichen, charakteristischen Eigenschaften des Dokumentinhalts I, wie z.B. Schriftart, Farbe, oder dgl. erfolgen kann. Es muss lediglich sichergestellt sein, dass nur jener Dokumentinhalt I diese charakteristische Eigenschaften aufweist, der mit der entsprechenden Objektkennung verknüpft ist, um eine eindeutige Referenzierung der Objektblöcke 11 zu ermöglichen.

Zur benutzerdefinierten Festlegung der Objektkennungen bzw. Selektions-Bedingungen in der Steuerlogik sei angemerkt, dass die Benutzereingaben über das Eingabegerät 9 erfolgen können und die benutzerdefinierten Daten im Zwischenspeicher 4 bzw. Festspeicher 10 von der Steuerlogik 5 aufrufbar hinterlegt sein können, wodurch eine benutzerdefinierte Filterung je nach Anwendungsfall ermöglicht wird.

Die Darstellung des Dokuments 2 bzw. der entsprechenden Objektkennungen oder Selektions-Bedingungen kann am Darstellungsmittel 7 erfolgen, wobei hierzu zur Navigation über Benutzereingaben eine grafische Benutzeroberfläche bzw. interaktive Textverarbeitungssysteme, wie beispielsweise Windows® bzw. Word® oder dergleichen, dem Datenverarbeitungssystem l zugeordnet sein kann und entsprechende, aktivierbare Auswahlmittel, wie Eingabefelder, Kontrollboxen, Listenfelder oder dgl., zur Dateneingabe vorgesehen sein können.

Zur Struktur der Steuerlogik 5 sei angemerkt, dass die unterschiedlichen Routinen, insbesondere die Gliederungsroutine 12 und Filterroutine 13, nur eine modulartige Gliederung in die einzelnen Funktionsabläufe darstellen, jedoch diese nicht als eigenständige, voneinander unabhängige Mittel bzw. Probrammlogiken gebildet sein müssen. Bevorzugt werden diese Funktionen der Routinen 12 und 13 erfüllt, indem in den Zwischenspeicher 4 aufrufbare Programmroutinen der Steuerlogik 5 die Einzelkomponenten des Datenverarbeitun systems 1 über Steuerbefehle entsprechend ansteuern.

Die in den Figuren 3, 4a und 4b dargestellten Flussdiagramme zeigen mögliche Varianten von erfindungsgemäßen Verfahrensabläufen. Der Verfahrensablauf gemäß Fig. 4a stellt dabei mögliche Funktionen der Gliederungsroutine 12 dar und es stellt der Verfahrensablauf gemäß Fig. 4b mögliche Funktionen der Filterroutine 13 dar.

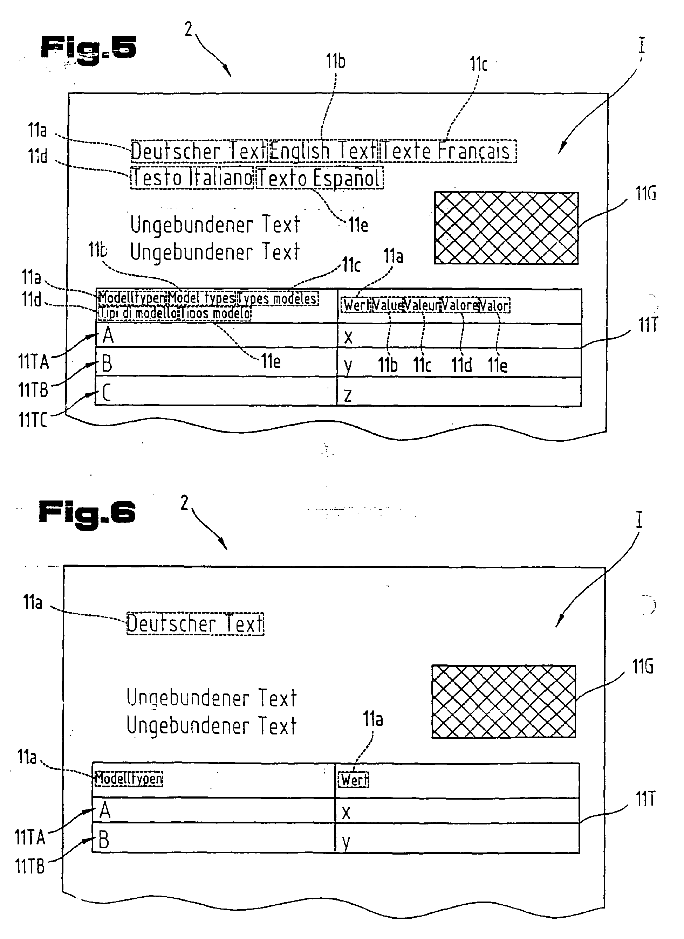

In den Fig. 5 und 6 ist ein exemplarisches Dokument 2 dargestellt, welches in Fig. 5 an einem Darstellungsmittel 7 visualisiert ist und in virtueller Form im Datenverarbeitungssystem 5 realisiert ist, d.h. mittels Benutzereingaben interaktiv veränderbar oder automatisiert über die Steuerlogik 5 veränderbar ist.

Wie in Fig. 5 dargestellt, ist der Dokumentinhalt I in mehrere Obj ektblöcke 11a bis 11e, 11G, 11T, 11TA bis 11TC gegliedert bzw. strukturiert. Jedem der Objektblöcke 11 ist hierbei eine für diesen charakteristische Objektkennung zugewiesen, sodass die unterschiedlichen Kategorien der Objektblöcke 11 referenzierbar sind. Durch die Objektblöcke 11a bis 11e ist exemplarisch eine Sprachzuordnung dargestellt, wobei jeder der Objektblöcke 11a bis 11e mit einer unterschiedlichen Objektkennung, insbesondere "Deutsch" (11a), "Englisch" (11b), "Französisch" (11c), "Italienisch" (11c), "Spanisch" (11e), verknüpft ist. Weiters ist eine Modell- bzw. Typenzuordnung durch den Objektblock 11G dargestellt, wobei die Objektkennung 11G einer schematisch dargestellten Grafik zugeordnet ist. Die weiters dargestellte Objektkennung 11T ist mit einer symbolisierten Tabelle im Dokument 2 verknüpft, wobei der übergeordnete Objektblock 11T durch die untergeordneten Objektblöcke 11TA bis 11TB hierbei hierarchisch in weitere Unterinstanzen gegliedert sein kann. Zum Objektblock Tabelle 11T sei angemerkt, dass diese selbstverständlich weitere, nicht näher dargestellte Unterinstanzen aufweisen kann, beispielsweise eine Gliederung nach Spalten, einzelnen Feldern usw. aufweisen kann, und das neben Tabellen, Grafiken, Text auch weitere aus ein oder mehreren Komponenten bestehende Objekte, wie z.B. Diagramme oder in das Dokument eingebettete, ausführbare Anwendungsdateien usw. mit den Objektkennungen in ein oder mehreren hierarchischen Stufen verknüpft werden können. Die unterschiedlichen Arten von Dokumentinhalten sind dem Fachmann aus dem Stand der Technik bekannt, weshalb nicht näher auf diese eingegangen wird.

Wird nun die Filterroutine 13 der Steuerlogik 5 in den Zwischenspeicher 4 aufgerufen und von der Hardware des Datenverarbeitungssystems 1 ausgeführt, erfolgt die Ein- bzw. Ausgliederung unterschiedlicher Dokumentinhalte I aus der grafischen Darstellung des Dokuments 2, wie dies als Ergebnis in Fig. 6 dargestellt ist. Es wurde hierbei eine Veränderung des Dokuments 2 durch Ausgliederung sämtlicher Sprachfassungen bis auf die Objektkennung "Deutsch" vorgenommen und es wurde der Objektblock 11TC aus der Tabelle 11T durch grafisches Ausblenden ausgeschieden. Somit liegt ein individualisiertes Dokument 2 vor, dass genau auf die notwendigen Anfordernisse abgestimmt ist. Dieses bereinigte Ergebnisdokument, gemäß Fig. 6, kann gemäß der Darstellung in eine weitere Datei extrahiert werden, auf ein physisches Medium, wie Papier, mittels der Ausgabeeinrichtung gedruckt werden oder dgl..

Grundsätzlich sei zu den Ergebnisdokumenten nach erfolgter Filterung bzw. Bereinigung mittels der Filterroutine 13 angemerkt, dass diese als inhaltlich unveränderbare bzw. nur indirekt veränderbare Datei in Art einer Vektor- bzw. Pixeldarstellung ausgegeben werden können oder inhaltlich veränderbar in einem von einem Textverarbeitungssystem les- bzw. verarbeitbaren Datenformat ausgegeben werden können. Des weiteren ist es möglich, das Datenverarbeitungssystem 1, insbesondere die als Computerprogrammprodukt realisierte Steuerlogik 5, welches zur Ausführung des erfindungsgemäßen Verfahrens benötigte elektronische Daten beinhaltet, über ein globales Netzwerk, insbesondere das Internet, anderen Benutzern zur Verfügung zu stellen, sodass über eine bekannte Netzwerkstruktur Netzwerkteilnehmer auf das Dokument 2 Zugriff haben und die erfindungsgemäßen Verfahrensschritte durchführen können.

Eine eigenständige, erfindungsgemäße Lösung betrifft das Datenverarbeitungssystem 1, das wie vorstehend beschrieben aufgebaut sein kann und das zur Durchführung der erfindungsgemäßen Verfahrensschritte ausgebildet ist.

Die Ausführungsbeispiele zeigen mögliche Ausführungsvarianten des erfindungsgemäßen Verfahrens, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus des Datenverarbeitungssystems 1 dieses bzw. dessen Bestandteile teilweise unmaßstäblich und/oder vergrößert und/oder verkleinert und stark schematisiert dargestellt wurden.

Die den eigenständigen erfinderischen Lösungen zugrundeliegende Aufgabe kann der Beschreibung entnommen werden.

Vor allem können die einzelnen in den Fig. 1, 2, 3, 4, 5; 6 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Datenverarbeitungssystem
- 2: Dokument
- 3: Prozessor
- 4: Zwischenspeicher
- 5: Steuerlogik

- 6: Datenbus
- 7: Darstellungsmittel
- 8: Ausgabeeinrichtung
- 9: Eingabegerät
- 10: Festspeicher

- 11: Objektblock
- 12: Referenzierungsroutine
- 13: Filterroutine

- I: Dokumentinhalt

## Patentansprüche

1. Verfahren zur elektronisch gesteuerten Verwaltung von grafisch darstellbaren Inhalten, insbesondere ein oder mehreren Zeichen, Grafiken, Tabellen, oder dergleichen, eines Dokuments in einem elektronischen Datenverarbeitungssystem, das zumindest aus einem Prozessor, einen Zwischenspeicher, eine insbesondere im Zwischenspeicher als Software hinterlegte Steuerlogik und einen Datenbus besteht, **dadurch gekennzeichnet, dass** durch Definition eines Start- bzw. Endzeigers des im Zwischenspeicher gelagerten Dokuments zumindest ein Teil eines Dokumentinhalts ausgewählt wird, mittels der Steuerlogik zumindest ein Objektblock durch Verknüpfen der ausgewählten Dokumentinhalte mit zumindest einer eindeutigen Objektkennung, insbesondere einem Kennungs- bzw. Referenz-Wert, bestimmt wird und mittels einer bei Bedarf ausführbaren Filterroutine der Steuerlogik in Abhängigkeit der durch diese als relevant ermittelten Objektkennungen der Dokumentinhalt gegebenenfalls verändert wird.

2. Verfahren nach einem der vorhergehenden Ansprüche, **dadurch gekennzeichnet, dass** über die Filterroutine der Steuerlogik der Dokumentinhalt derartig verändert wird, dass eine Veränderung der Sichtbarkeit von Objektblöcken im Dokument durch aus- oder einblenden derselben erfolgt.

3. Verfahren nach einem der vorhergehenden Ansprüche, **dadurch gekennzeichnet, dass** über die Filterroutine der Steuerlogik der Dokumentinhalt derartig verändert wird, dass Objektblöcke aus dem Dokument extrahiert werden, wobei das Dokument den mit den auszulesenden Dokumentinhalten versehenen Quell-Datensatz darstellt und in einen Ziel-Datensatz im Zwischen- oder Festspeicher die ausgelesenen Dokumentinhalte hinterlegt werden.

4. Verfahren nach einem der vorhergehenden Ansprüche, **dadurch gekennzeichnet, dass** über die Filterroutine der Steuerlogik der Dokumentinhalt derartig verändert wird, dass Objektblöcke aus dem Dokument gelöscht oder eingefügt bzw. aus einer Fremddatei importiert werden.

5. Verfahren nach einem der vorhergehenden Ansprüche, **dadurch gekennzeichnet, dass** über die Filterroutine der Steuerlogik der Dokumentinhalt derartig verändert wird, dass die Position der Objektblöcke im Dokument verändert wird und Objektblöcke im Dokument an eine Position unterhalb oder oberhalb der bisherigen Position verschoben werden, beispielsweise an den Beginn einer neuen Seite, Zeile, Absatz oder einer definierten Markierung im Dokument.

6. Verfahren nach einem der vorhergehenden Ansprüche, **dadurch gekennzeichnet, dass** über die Filterroutine der Steuerlogik der Dokumentinhalt derartig verändert wird, dass Eigenschaften des Dokumentinhalts in den Objektblöcken des Dokuments verändert werden, wobei hierbei beispielsweise ein Veränderung von Darstellungsfarbe, Darstellungsgröße, Schriftart, Darstellungseffekten von Zeichenblöcken, Tabellen, Grafiken usw. erfolgt.

7. Verfahren nach einem der vorhergehenden Ansprüche, **dadurch gekennzeichnet, dass** im Dokument durch die Zuweisung der Objektkennungen eine Struktur, bestehend aus zumindest einem Objektblock und gegebenenfalls weiteren Dokumentinhalten ohne Objektkennung geschaffen wird.

8. Verfahren nach einem der vorhergehenden Ansprüche, **dadurch gekennzeichnet, dass** zur Definition eines Objektblockes eine Gliederungsroutine der Steuerlogik aufgerufen wird, die den ausgewählten Dokumentinhalten zumindest eine Objektkennung bzw. einen aus dieser generierten Referenz-Wert zuweist.

9. Verfahren nach einem der vorhergehenden Ansprüche, **dadurch gekennzeichnet, dass** in der Gliederungsroutine Kategorien für Sprachzuordnungen vorgesehen sind, wobei zu diesen unterschiedliche Objektkennungen, beispielsweise "Deutsch", "Englisch", "Französisch", "Italienisch", "Spanisch" usw., hinterlegt sind bzw. diese einem Dokumentinhalt zuweisbar sind.

10. Verfahren nach einem der vorhergehenden Ansprüche, **dadurch gekennzeichnet, dass** in der Gliederungsroutine Kategorien für Typ- bzw. Modellzuordnungen vorgesehen sind, wobei zu diesen unterschiedliche Objektkennungen, beispielsweise Bauteil- bzw. Funktionsbezeichnungen, numerische Angaben, Produkteigenschaften usw., hinterlegt sind bzw. diese einem Dokumentinhalt zuweisbar sind.

11. Verfahren nach einem der vorhergehenden Ansprüche, **dadurch gekennzeichnet, dass** die Objektkennungen der Gliederungsroutine und/oder Selektions-Bedingungen der Filterroutine durch Benutzereingaben frei definierbar bzw. dauerhaft hinterlegbar sind.

12. Verfahren nach einem der vorhergehenden Ansprüche, **dadurch gekennzeichnet, dass** den unterschiedlichen Objektkennungen je unterschiedliche Referenz-Werte zugeordnet werden, wobei ein oder mehrere dieser unterschiedlichen Objektkennungen je mit dem ausgewählten Dokumentinhalt verknüpfbar sind.

13. Verfahren nach einem der vorhergehenden Ansprüche, **dadurch gekennzeichnet, dass** die Objektkennungen den Objektblöcken als zusätzlicher Datensatz, insbesondere einer Signatur, zugeordnet werden oder die Objektkennungen durch Vergabe von unterschiedlichen Eigenschaften, insbesondere Schriftart, Farbe, oder dgl., in den Dokumentinhalten der Objektblöcke eingebettet bzw. integriert werden.

14. Verfahren nach einem der vorhergehenden Ansprüche, **dadurch gekennzeichnet, dass** über die in den Zwischenspeicher aufgerufene Filterroutine der Steuerlogik zumindest eine Selektions-Bedingung ausgewählt oder bestimmt wird, insbesondere ein für diese eindeutiger Wert im Zwischenspeicher hinterlegt wird.

15. Verfahren nach einem der vorhergehenden Ansprüche, **dadurch gekennzeichnet, dass** unterschiedliche Selektions-Bedingungen zur Filterung nach den unterschiedlichen Objektkennungen der Objektblöcke vorgesehen sind, wobei die möglichen Selektions-Bedingungen bevorzugt den im Dokument vorhandenen Objektkennungen entsprechen.

16. Verfahren nach einem der vorhergehenden Ansprüche, **dadurch gekennzeichnet, dass** durch die Filterroutine relevante Objektblöcke durch Gegenüberstellung bzw. Vergleich der Objektkennungen zu den Selektions-Bedingungen ausgewertet werden und in Abhängigkeit der als relevant festgestellten Objektblöcke die Veränderung des Dokuments erfolgt.

17. Verfahren nach einem der vorhergehenden Ansprüche, **dadurch gekennzeichnet, dass** die Benutzereingaben mittels einem Eingabegerät, insbesondere einer Tastatur oder einem Zeigegerät wie einer Maus, erfolgen und die entsprechenden Objektkennungen, Selektions-Bedingungen, usw. am Darstellungsmittel angezeigt werden und entsprechende, aktivierbare Auswahlmittel, insbesondere Eingabefelder, Kontrollboxen, Listenfelder, oder dergleichen, über eine grafische Benutzeroberfläche, beispielsweise WINDOWS®, dargestellt werden.

18. Verfahren nach einem der vorhergehenden Ansprüche, **dadurch gekennzeichnet, dass** die Definition des Start- bzw. Endzeigers durch Markieren von Dokumentinhalten im Dokument bzw. die Durchführung der weiteren Verarbeitungsschritte im Dokument in einem interaktiven Textverarbeitungssystem, beispielsweise WORD®, erfolgt.

19. Verfahren nach einem der vorhergehenden Ansprüche, **dadurch gekennzeichnet, dass** als Datenverarbeitungssystem ein Computersystem wie z.B. ein Personal Computer, verwendet wird.

20. Verfahren nach einem der vorhergehenden Ansprüche, **dadurch gekennzeichnet, dass** das elektronische Dokument bzw. die Steuerlogik in den dynamischen Zwischenspeicher zur Steuerung der Komponenten des Datenverarbeitungssystems aufrufbar sind und diese vorzugsweise in einem Festspeicher wie einem magnetischen, optischen oder digitalen Speichermedium hinterlegt sind.

21. Verfahren nach einem der vorhergehenden Ansprüche, **dadurch gekennzeichnet, dass** das Dokument mit den am Darstellungsmittel abgebildeten Dokumentinhalt an einer Ausgabeeinrichtung, insbesondere einem Drucker, ausgegeben werden kann.

22. Datenverarbeitungssystem, zumindest umfassend einen Prozessor, einen Zwischenspeicher, eine insbesondere im Zwischenspeicher als Software hinterlegte Steuerlogik und einen Datenbus, **dadurch gekennzeichnet, dass** das Datenverarbeitungssystem bzw. die Steuerlogik zur Durchführung des Verfahrens nach einem der Ansprüche 1 bis 21 ausgebildet ist.
